# EUROPEAN PATENT APPLICATION

(11) **EP 2 028 354 A2**
(43) Date of publication of application: **25.02.2009**
(21) Application number: 08252809.2
(22) Date of filing: 22.08.2008
(51) Int. Cl.: F02D 41/04, F02D 41/06

(54) **Controller for internal combustion engine**

(30) Priority: 24.08.2007 JP 2007218274
(71) Applicant: Toyota Jidosha Kabushiki Kaisha, Toyota-shi, Aichi-ken 471-8571 (JP)
(72) Inventor: Uchida, Akito, Toyota-shi Aichi-ken 471-8571 (JP); Yoshihara, Masatomo, Toyota-shi Aichi-ken 471-8571 (JP); Hatta, Yuuji, Toyota-shi Aichi-ken 471-8571 (JP)
(74) Representative: Albutt, Anthony John

(57) **Abstract**

A controller for an internal combustion engine (1). The controller includes a means for automatically stopping the engine (1) when predetermined stopping conditions are satisfied, a means for automatically restarting the engine (1) when predetermined restarting conditions are satisfied, and a main switch (71). The controller invalidates the automatic restarting of the engine (1) and starts the engine (1) in a normal manner if the main switch (71) is arranged at a start position after the engine (1) is automatically stopped but before the predetermined restarting conditions are satisfied.

## Description

The present invention relates to a controller which executes automatic stopping and starting control on an internal combustion engine.

Nowadays, to improve fuel efficiency, reduce exhaust gas, and reduce noise, a controller for an internal combustion engine that executes automatic stopping and starting control has been put into practical use. Automatic stopping and starting control automatically stops the engine when the vehicle becomes still and automatically restarts the engine when starting to move the vehicle. Japanese Examined Patent Publication No. 51-38968 describes a controller that automatically stops the engine when predetermined stopping conditions are satisfied, such as the gearshift position of a manual transmission being shifted to a neutral position when the vehicle is still. The controller automatically restarts the engine when predetermined restarting conditions that can be expected when starting movement of the vehicle are satisfied, such as the depression of a clutch pedal when the engine is not running due to an automatic stopping control.

In a typical internal combustion engine, detection of the crank angle is based on a pattern of signals output from a crank position sensor and a cam position sensor when the engine is running during which a crankshaft and a camshaft are rotating. The engine executes independent injection in which fuel is independently injected into each cylinder in accordance with the detected crank angle. Independent injection enables fine fuel injection control for each cylinder and supplies each cylinder with the necessary amount of fuel.

However, the crank angle cannot be detected by the crank position sensor and the cam position sensor when the engine is not running during which the crankshaft and the camshaft are not rotating. Thus, when starting the engine, a starter motor is driven to crank the engine. During the cranking, based on the pattern of signals output from the crank position sensor and the cam position sensor, the identification of cylinders and detection of the crank angle are performed. Upon completion of cylinder identification, independent injection is executed for each cylinder based on the detected crank angle to start the engine.

In a vehicle that uses an internal combustion engine which executes the above-described automatic stopping and starting control, it is desirable that the engine be quickly restarted when restarting movement of the vehicle from an automatically stopped state such as when stopping for a red traffic light. Japanese Laid-Open Patent Publication No. 2007-64124 describes a controller for an internal combustion engine that executes an automatic starting process. In detail, during the automatic starting process, when the internal combustion engine is automatically stopped, the present crank angle is first stored in a memory. When automatically restarting the engine, fuel is injected in advance into a predetermined cylinder based on the crank angle. Then, the starter motor is driven to sequentially inject fuel into each cylinder and start the engine. Such a controller enables fine fuel injection control to be immediately started on each cylinder during automatic restarting so that the restarting can be promptly completed.

However, in the above-described controllers for internal combustion engines that execute automatic stopping and starting control, the determination of whether the restarting conditions are satisfied may be hindered when, for example, depression of the clutch pedal cannot be detected due to failure of a switch for detecting the depression. In such a case, the internal combustion engine cannot be automatically restarted. Therefore, in order to start the engine, a main switch must first be turned to an OFF position and then turned back to a start position. As a result, the above-described controllers cannot quickly start the engine when automatic restarting is disabled.

It is an object of the present invention to provide a controller that executes an automatic starting process based on the crank angle in a state in which the engine is automatically stopped when restarting conditions are satisfied while also enabling manual and quick restarting of the engine when automatic restarting is disabled.

One aspect of the present invention is a controller for an internal combustion engine. The controller includes an automatic stopping means adapted to stop the internal combustion engine when predetermined stopping conditions are satisfied. A memory stores a crank angle of when the internal combustion engine is stopped by the automatic stopping means. An automatic restarting means is adapted to determine a cylinder which one of cylinders is capable of burning air fuel mixture based on the crank angle stored in the memory when predetermined restarting conditions are satisfied and to execute an automatic starting process that starts the internal combustion engine by driving a starter motor after injecting fuel in advance into the determined one of the cylinders and then injects fuel individually into each of the cylinders. A main switch drives the starter motor when arranged at a start position. The controller executes a normal starting process when the main switch is arranged at the start position to start the internal combustion engine by driving the starter motor and injecting fuel and then executes an automatic stopping and starting control that automatically stops or restarts the internal combustion engine with the automatic stopping means and the automatic restarting means. The controller invalidates the automatic starting process of the automatic restarting means and executes the normal starting process when the main switch is arranged at the start position during a period from when the internal combustion engine is stopped by the automatic stopping means until when the predetermined restarting conditions are satisfied.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic diagram showing a preferred embodiment of an internal combustion engine and a controller for the engine according to the present invention;
Fig. 2A is a timing chart showing the fuel injection timing for a normal starting process;
Fig. 2B is a timing chart showing the fuel injection timing for an automatic starting process;
Fig. 3 is a flowchart showing a process for starting the engine before execution of an automatic stopping and starting control;
Fig. 4 is a flowchart showing a process for automatic stopping control; and
Fig .5 is a flowchart showing a process for automatic restarting control.

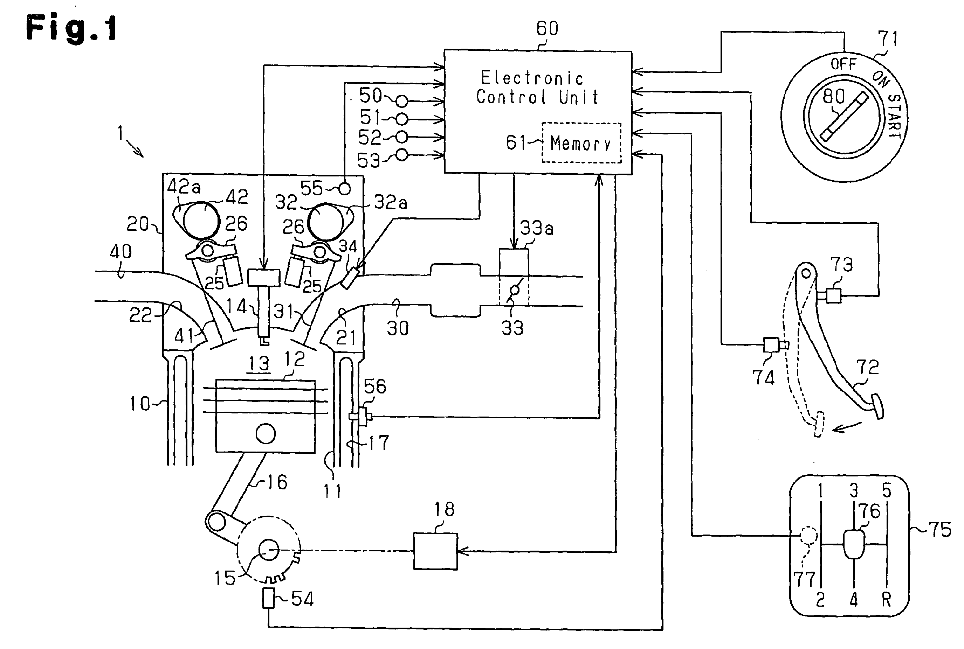

A preferred embodiment of a controller for an internal combustion engine according to the present invention will now be discussed with reference to Figs. 1 to 5.

In the preferred embodiment, an internal combustion engine 1 is a four-cylinder in-line engine including four cylinders, namely, first to fourth cylinders. The engine 1 is mounted on a vehicle equipped with a manual transmission. Fig. 1 shows only one of the cylinders.

As shown in Fig. 1, the internal combustion engine 1 has a cylinder block 10 including cylinders 11. A reciprocating piston 12 is accommodated in each cylinder 11. A water jacket 17, through which coolant circulates, is formed in the cylinder block 10 surrounding the cylinders 11. The piston 12 is coupled to a crankshaft 15 by a connecting rod 16. The internal combustion engine 1 includes a starter motor 18 (electric motor) for rotating the crankshaft 15 when starting the engine.

A cylinder head 20 is mounted on the upper part of the cylinder block 10. A combustion chamber 13 is defined between the inner surface of each cylinder 11, the upper surface of the corresponding piston 12, and the lower surface of the cylinder head 20. An ignition plug 14 projects into each combustion chamber 13 from the cylinder head 20, which includes an intake port 21 and an exhaust port 22 connected to each combustion chamber 13.

Each intake port 21 is connected to an intake manifold (not shown) and forms part of an intake passage 30. Each exhaust port 22 is connected to an exhaust manifold (not shown) and forms part of an exhaust passage 40. As shown in Fig. 1, a throttle valve 33 for adjusting the amount of air drawn into the combustion chambers 13 is arranged in the intake passage 30. The throttle valve 33 is driven by a motor 33a. A plurality of fuel injection valves 34 are arranged in the intake passage 30 in correspondence with the cylinders 11 to injecting fuel towards the associated intake port 21.

As shown in Fig. 1, for each cylinder 11, the cylinder head 20 includes an intake valve 31 and an exhaust valve 41. The intake valve 31 connects and disconnects the intake passage 30 and the combustion chamber 13, and the exhaust valve 41 connects and disconnects the exhaust passage 40 and the combustion chamber 13. The valves 31 and 41 are each biased in a valve closing direction by the biasing force of a valve spring (not shown). A lash adjuster 25 is arranged in correspondence with each of the valves 31 and 41 in the cylinder head 20. A rocker arm 26 is arranged between each lash adjuster 25 and the corresponding one of the valves 31 and 41. As shown in Fig. 1, the rocker arm 26 has a basal end supported by the lash adjuster 25 and a distal end contacted to a basal end of the corresponding one of the valves 31 and 41.

The cylinder head 20 rotatably supports an intake camshaft 32 for driving the intake valves 31 and an exhaust camshaft 42 for driving the exhaust valves 41. The intake camshaft 32 and the exhaust camshaft 42 are each coupled to the crankshaft 15 by a timing chain (not shown) so as to rotate twice when the crankshaft 15 rotates once. Intake cams 32a are formed on the intake camshaft 32, and exhaust cams 42a are formed on the exhaust camshaft 42. As shown in Fig. 1, each intake cam 32a is in contact with the associated rocker arm 26, which is in contact with the corresponding intake valve 31. The exhaust cam 42a is in contact with the associated rocker arm 26, which is in contact with the corresponding exhaust valve 41. Rotation of the intake camshaft 32 and the exhaust camshaft 42 when the engine is operating moves the intake valves 31 in the valve opening direction in accordance with the action of the intake cams 32a and moves the exhaust valves 41 in the valve opening direction with the action of the exhaust cams 42a.

Various sensors detect the engine operation state of the internal combustion engine 1. A vehicle speed sensor 50 detects the vehicle speed SPD. An accelerator sensor 51 arranged on an accelerator pedal (not shown) detects the depression amount of the accelerator pedal (accelerator depression amount ACCP). A throttle position sensor 52 detects the open amount (throttle angle TA) of the throttle valve 33. An air flowmeter 53 arranged in the intake passage 30 detects the amount of air drawn into the combustion chambers 13 (intake air amount GA). A crank position sensor 54 is arranged near the crankshaft 15 to output a pulse signal for every predetermined rotation angle of the crankshaft 15. Engine speed NE is calculated based on the signal from the crank position sensor 54. A cam position sensor 55 is arranged near the intake camshaft 32 to output a signal corresponding to a phase of the intake camshaft 32. A coolant temperature sensor 56 is arranged in the cylinder block 10 to detect the temperature of the coolant circulating through the water jacket 17 (engine coolant temperature THW).

The various sensors are connected to an electronic control unit 60 for executing various engine controls on the internal combustion engine 1. The electronic control unit 60 receives the detection signals from the various sensors to execute various calculation processes related to the engine controls. A memory 61 for storing various calculation results is arranged in the electronic control unit 60.

The electronic control unit 60 comprehensively controls the internal combustion engine 1 based on the results of the various calculation processes. Specifically, the electronic control unit 60 executes cylinder identification based on the output signals from the crank position sensor 54 and the cam position sensor 55 to set the fuel injection timing and ignition timing for each cylinder based on the crank angle, which is the rotation angle of the crankshaft 15.

The electronic control unit 60 controls the motor 33a based on the engine speed NE and the accelerator depression amount ACCP to drive the throttle valve 33 and adjust the intake air amount GA. Further, the electronic control unit 60 controls the open period of each fuel injection valve 34 in accordance with the intake air amount GA to adjust the fuel injection amount.

Various switches for detecting operations performed by the vehicle driver are connected to the electronic control unit 60. A main switch 71, which detects engine operation requests, is operated by the driver in a state in which a key 80 is inserted therein. Specifically, the main switch 71 activates the electronic control unit 60 when arranged at an "ON" position as shown in Fig. 1. The main switch 71 drives the starter motor 18 and operates the crankshaft 15 when arranged at a "START" position and executes a starting control for starting the internal combustion engine 1 with the electronic control unit 60. The main switch 71 is constantly biased towards the "ON" position from the "START" position. Thus, the main switch 71 returns from the "START" position to the "ON" position when the driver releases the main switch 71. If the main switch 71 is arranged at an "OFF" position when the engine is running, the electronic control unit 60 is deactivated after execution of an engine stopping process for stopping the internal combustion engine.

A clutch upper switch 73 and a clutch lower switch 74 for detecting the depression of a clutch pedal 72 by the driver are arranged near the clutch pedal 72. As shown in Fig. 1, when the clutch pedal 72 is not depressed, pressure is applied to the clutch upper switch 73. In this state, the clutch upper switch 73 is in contact with part of the clutch pedal 72 and activated. When the clutch upper switch 73 becomes free from the pressure, that is, when the clutch pedal 72 is depressed, the clutch upper switch 73 is deactivated.

When the clutch pedal 72 is completely depressed, the state of which is shown by broken lines in Fig. 1, pressure is applied to the clutch lower switch 74. This activates the clutch lower switch 74. When the clutch pedal 72 is released, the clutch lower switch 74 is released from the pressure and deactivated. In this manner, the operation state of the clutch pedal 72 is detected based on the activated and deactivated states of the clutch upper switch 73 and the clutch lower switch 74.

A neutral position switch 77 for detecting the shifting of a gearshift lever 76 to the neutral position is arranged in a gearshift device 75 of the manual transmission.

The electronic control unit 60 executes automatic stopping and starting control for the internal combustion engine 1 based on the operations performed by the driver that are detected by various switches. The automatic stopping and starting control automatically stops the internal combustion engine 1, for example, when the vehicle is stopped by a traffic light at an intersection. Further, the automatic stopping and starting control automatically starts the internal combustion engine 1 when it can be expected that the driver will start to move the vehicle based on the operations performed by the driver.

Specifically, the internal combustion engine 1 is automatically stopped if predetermined stopping conditions are satisfied when the engine is operating, such as the shifting of the gearshift lever 76 to the neutral position detected by the neutral position switch 77 and activation of the clutch upper switch 73 when the vehicle is still. Thus, the electronic control unit 60 functions as an automatic stopping means for stopping the internal combustion engine 1 when predetermined stopping conditions are satisfied.

The internal combustion engine 1 is automatically started when predetermined restarting conditions are satisfied, such as the clutch upper switch 73 being deactivated, depression of the clutch pedal 72 being detected, and the above-described stopping conditions becoming unsatisfied when the vehicle is still. Thus, the electronic control unit 60 functions as an automatic restarting means for restarting the internal combustion engine 1 when the predetermined restarting conditions are satisfied. Execution of the above-described automatic stopping and starting control suppresses engine idling, improves fuel efficiency, and reduces exhaust gas, and reduces noise.

Generally, the starter motor 18 is driven to crank and start the engine. During the cranking, cylinder identification is executed and the crank angle is detected based on the pattern of signals output from the crank position sensor 54 and the cam position sensor 55. After cylinder identification is completed, the electronic control unit 60 executes independent injection in which fuel is injected into each cylinder 11 based on the detected crank angle to start the engine.

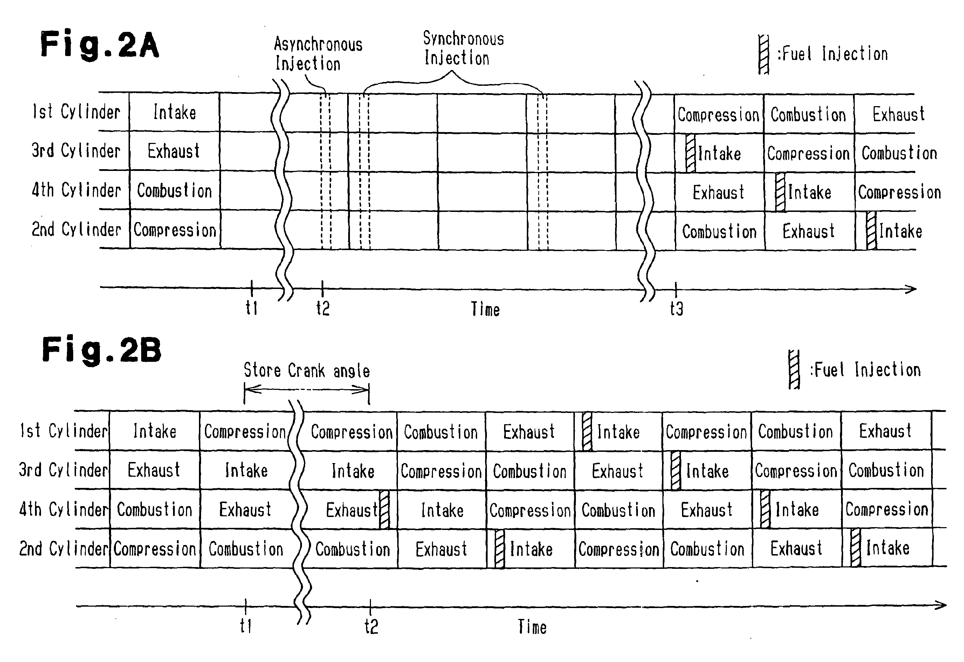

For instance, it is assumed here that the internal combustion engine 1 is stopped at time t1, as shown in Fig. 2A. When a starting request is generated at time t2, the starter motor 18 is driven to start cranking. As the crankshaft 15 starts to rotate, cylinder identification is completed at time t3. After the cylinder identification is completed, fuel is supplied to the combustion chambers 13 at appropriate timings to burn air-fuel mixture in each cylinder 11 in accordance with the detected crank angle.
The appropriate timing for burning the air-fuel mixture in each cylinder 11 is, for example, the former half of the intake stroke.

Hereafter, the above-described starting process, or a process for executing the independent injection of fuel into each cylinder 11 after the cranking and the cylinder identification are completed, will be referred to as the normal starting process.

In the normal starting process, the engine may be started when it is still cold and fuel cannot be sufficiently atomized. In such a state, to improve the starting characteristics of the engine, when the main switch 71 is turned to the "START" position to start cranking the engine, asynchronous injection is first performed and then synchronous injection is performed as shown by the broken lines in Fig. 2A. During asynchronous injection, fuel is simultaneously injected into every one of the cylinders 11 when starting cranking regardless of the current crank angle. During synchronous injection, fuel is simultaneously injected into the cylinders 11 in synchronism with predetermined crank angles.

When executing the above-described automatic stopping and starting control, it is desirable that the restarting of the internal combustion engine 1 be quickly completed from a state in which the engine has been automatically stopped such as when waiting for a traffic light to change. In the preferred embodiment, the electronic control unit 60 stores in the memory 61 the current crank angle when the internal combustion engine 1 is stopped by the automatic stopping. Based on the stored crank angle, during automatic restarting, the electronic control unit 60 injects fuel into the predetermined cylinder 11 in advance. Further, the electronic control unit 60 drives the starter motor 18 and sequentially injects fuel into the cylinders 11 to start the internal combustion engine 1.

Specifically, as shown in Fig. 2B, the electronic control unit 60 stores in the memory 61 the current crank angle when the internal combustion engine 1 stops running at time t1. The crank angle is held in the memory 61 during the execution of the automatic stopping and starting control. When the predetermined restarting conditions are satisfied at time t2, based on the crank angle held in the memory 61, the electronic control unit 60 first injects fuel into the cylinder 11 in which air-fuel mixture is first burned. The electronic control unit 60 estimates the time period required for each cylinder 11 to shift from the intake stroke to the compression stroke based on the crank angle stored in the memory 61. Then, the electronic control unit 60 injects fuel into the cylinder 11 that is in the intake stroke if the estimated time period is longer than or equal to a predetermined time period. If the estimated time period is shorter than the predetermined time period, the electronic control unit 60 injects fuel into the cylinder 11 that is in the exhaust stroke. For example, as shown in Fig. 2B, the third cylinder is in the intake stroke when the engine 1 stops running at time t2. At time t2, the third cylinder is in the latter half of the intake stroke. Thus, fuel may not be sufficiently supplied to the combustion chamber 13 that corresponds to the third cylinder when cranking is started. In such a case, fuel is injected into the fourth cylinder, which is in the exhaust stroke. Then, the starter motor 18 starts to crank the engine 1 and sequentially injects fuel into the cylinders 11 at optimal timings for burning the air-fuel mixture in each cylinder 11, such as during the former half of the intake stroke.

As described above, the electronic control unit 60 drives the starter motor 18 after injecting fuel in advance into the cylinder 11 in which the air-fuel mixture is first burned by referring to the crank angle when automatic stopping was executed. Thus, fine fuel injection control can be immediately started for each cylinder 11 during automatic restarting, and the starting of the engine 1 can be quickly carried out.

Hereafter, the starting process for injecting fuel in advance into the cylinder 11 in which the air-fuel mixture is first burned based on the crank angle stored in the memory 61 and then driving the starter motor 18 to start the internal combustion engine 1 is referred to as an automatic starting process as opposed to the normal starting process.

In the controller for the internal combustion engine that executes the automatic stopping and starting control to automatically restart the internal combustion engine 1 when the predetermined restarting conditions are satisfied, the internal combustion engine 1 cannot be automatically restarted if it cannot be determined whether the restarting conditions are satisfied due to a failure. For example, when the clutch upper switch 73 does not function properly and becomes fixed in an activated state, depression of the clutch pedal 72 cannot be detected.

In the electronic control unit 60, the automatic starting process is executed based on the crank angle if the restarting conditions are satisfied in a state in which the engine 1 has been automatically stopped. If the main switch 71 is turned to the "START" position when the engine 1 has been automatically stopped, the normal starting process is executed without referring to the crank angle.

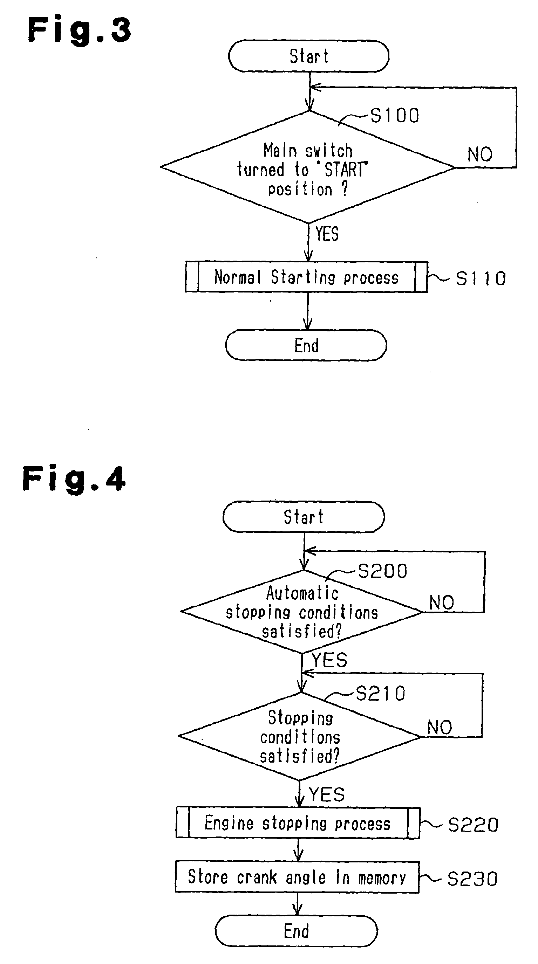

The flow of the automatic stopping and starting control carried out by the electronic control unit 60 will now be discussed in detail with reference to Figs. 3 to 5.

Fig. 3 is a flowchart showing the series of processes performed from when the electronic control unit 60 is activated through operation of the main switch 71 to when the internal combustion engine 1 is started, that is, until the execution of the automatic stopping and starting control is initiated. The series of processes are executed by the electronic control unit 60 when the main switch 71 is turned from the "OFF" position to the "ON" position or to the "START" position.

As shown in Fig. 3, in step S100, the electronic control unit 60 determines whether the main switch 71 has been turned to the "START" position. If determined that the main switch 71 has not been turned to the "START" position in step S100, the electronic control unit 60 repeats step S100.

If determined that the main switch 71 has been turned to the "START" position in step S100, the electronic control unit 60 proceeds to step S110 and executes the normal starting process. In the normal starting process, the electronic control unit 60 drives the starter motor 18 and rotates the crankshaft 15 when the main switch 71 is arranged at the "START" position. After completing cylinder identification based on the output signals from the crank position sensor 54 and the cam position sensor 55 as the crankshaft 15 rotates, the electronic control unit 60 injects fuel into each cylinder 11 based on the detected crank angle to burn air-fuel mixture at an appropriate timing. As described above, the electronic control unit 60 executes the asynchronous injection and the synchronous injection until the cylinder identification is completed depending on the engine coolant temperature THW detected by the coolant temperature sensor 56.

After the normal starting process of step S110 is executed and the starting of the engine 1 is completed, the electronic control unit 60 ends the processing of Fig. 3 and starts the automatic stopping and starting control.

The series of processes of the automatic stopping control, which is related to the automatic stopping and starting control, will now be discussed with reference to Fig. 4. Fig. 4 is a flowchart showing the series of processes of the automatic stopping control. These series of processes are executed by the electronic control unit 60 when the engine 1 is running.

As shown in Fig. 4, in step S200, the electronic control unit 60 first determines whether automatic stopping preconditions are satisfied. The automatic stopping preconditions are the conditions necessary for appropriately executing the automatic stopping and starting control. The automatic stopping preconditions include the engine coolant temperature THW being higher than or equal to a predetermined temperature, the internal combustion engine 1 being sufficiently warmed, and the supply of voltage from the battery being stabile and greater than or equal to a predetermined voltage.

If the electronic control unit 60 determines that the automatic stopping preconditions are satisfied in step S200, the electronic control unit 60 proceeds to step S210 and determines whether stopping conditions are satisfied. In the preferred embodiment, the stopping conditions include the shifting of the gearshift lever 76 to the neutral position being detected by the neutral position switch 77 when the vehicle is still and the clutch upper switch 73 being activated. If determined that the stopping conditions are satisfied in step S210, the electronic control unit 60 proceeds to step S220 and executes the engine stopping process to stop fuel injection thereby stopping the internal combustion engine 1. The electronic control unit 60 then proceeds to step S230 and stores in the memory 61 the present crank angle of when the engine 1 was stopped.

If determined that the stopping conditions are not satisfied in step S210, the electronic control unit 60 repeats step S210 and continues to operate the engine 1 until the stopping conditions are satisfied.

If determined that the automatic stopping preconditions are not satisfied in step S200, the electronic control unit 60 repeats step S200. That is, the electronic control unit 60 continues to operate the engine 1 and prohibits the execution of automatic stopping regardless of whether the stopping conditions are satisfied until the automatic stopping preconditions are satisfied.

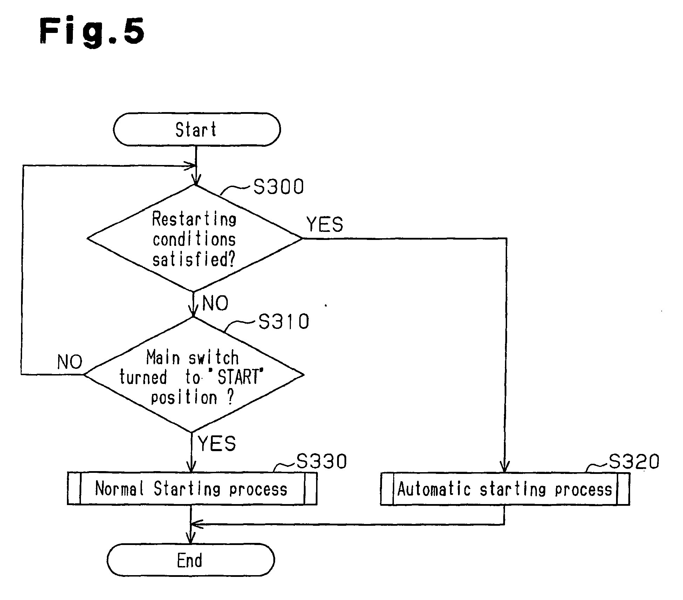

As described above, when the internal combustion engine 1 is stopped through the automatic stopping control and the present crank angle when the engine is stopped is stored in the memory 61 in step S230, the electronic control unit 60 ends the series of processes shown in Fig. 4 and proceeds to the automatic restarting control illustrated in Fig. 5.

The series of processes related to the automatic restarting control executed when the engine 1 is automatically stopped will now be discussed with reference to Fig. 5. Fig. 5 is a flowchart showing the series of processes related to the automatic restarting control. The processes of Fig. 5 are executed by the electronic control unit 60 when the internal combustion engine 1 is automatically stopped through the automatic stopping control of Fig. 4 in a state in which the main switch 71 is arranged at the "ON" position.

In step S300, the electronic control unit 60 first determines whether the restarting conditions are satisfied. In the preferred embodiment, the restarting conditions include the clutch upper switch 73 being deactivated when the vehicle is still, that is, the above-described stopping conditions being unsatisfied.

If determined that the restarting conditions are satisfied in step S300, the electronic control unit 60 proceeds to step S320, executes the automatic starting process described above based on the crank angle stored in the memory 61 in step S230 of Fig. 4, and starts the internal combustion engine 1. After the starting of the internal combustion engine 1 is completed by the automatic starting process, the electronic control unit 60 ends the processes of Fig. 5 and proceeds to the automatic stopping control of Fig. 4.

If determined that the restarting conditions are not satisfied in step S300, the electronic control unit 60 proceeds to step S310 and determines whether the main switch 71 has been turned to the "START" position.

If determined that the main switch 71 is turned to the "START" position in step S310, the electronic control unit 60 proceeds to step S330 and executes the normal starting process described above to start the internal combustion engine 1 without referring to the crank angle stored in the memory 61 even if the automatic starting and stopping control is being executed. After completing the starting of the internal combustion engine 1 through the normal starting process in step S330, the electronic control unit 60 ends the processes of Fig. 5 and proceeds to the automatic stopping control of Fig. 4.

In step S310, if determined that the main switch 71 is not turned to the "START" position, that is, if the main switch 71 remains at the "ON" position, the electronic control unit 60 returns to step S300.

In the preferred embodiment, the electronic control unit 60 repeats the automatic stopping control of Fig. 4 and the automatic restarting control of Fig. 5 so that the automatic stopping and starting control for automatically stopping the internal combustion engine 1 when the stopping conditions are satisfied and automatically restarting the internal combustion engine 1 when the restarting conditions are satisfied is executed. In the automatically stopped state during the execution of the automatic stopping and starting control, the internal combustion engine 1 is restarted through the automatic starting process if the restarting conditions are satisfied, and the internal combustion engine 1 is restarted through the normal starting process when the main switch 71 is turned to the "START" position even if the restarting conditions are not satisfied.

The preferred embodiment described above has the advantages described below.
(1) Even when the engine 1 is automatically stopped state during the execution of the automatic stopping and starting control, if the main switch 71 is turned to the "START" position and the starter motor 18 is driven, the automatic starting process, which is based on the crank angle stored in the memory 61, is invalidated and the normal starting process is executed. Thus, even if the electronic control unit 60 cannot determine whether the restarting conditions are satisfied due to the clutch upper switch 73 being fixed and held in an activated state, the electronic control unit 60 starts the engine 1 through the normal starting process and restarts the internal combustion engine 1 when the main switch 71 is turned to the "START" position. Therefore, the automatic starting process is executed based on the crank angle when the restarting conditions are satisfied in a state in which the engine 1 is automatically stopped, and the internal combustion engine 1 is quickly and manually restarted even if automatic restarting is disabled.
(2) In the automatic starting process, the electronic control unit 60 estimates the time period required for the cylinder that is in the intake stroke to shift to the compression stroke based on the crank angle stored in the memory 61 when the restarting conditions are satisfied. If the estimated time period is longer than or equal to a predetermined time period, the electronic control unit 60 determines that the air-fuel mixture will burn in the cylinder 11 that is in the intake stroke by injecting fuel into the cylinder 11 in advance during restarting. Thus, the electronic control unit 60 injects fuel into the cylinder 11 that is in the intake stroke. If the estimated time period is shorter than the predetermined time period, the electronic control unit 60 determines that the air-fuel mixture will not burn in the cylinder 11 that is in the intake stroke even if fuel is supplied in advance to that cylinder 11. Thus, the electronic control unit 60 injects fuel in advance into the cylinder 11 that is in the exhaust stroke.
   Accordingly, the automatic starting process is executed by appropriately determining the cylinder 11 in which air-fuel mixture can burn based on the crank angle stored in the memory 61 and injecting fuel in advance into that cylinder 11.
(3) In the preferred embodiment, the neutral position switch 77 detects the shifting of the gearshift lever 76 to the neutral position. The vehicle being still and the shifting of the gearshift lever 76 to the neutral position are set as stopping conditions. Thus, the electronic control unit 60 automatically stops the internal combustion engine 1 by determining that the internal combustion engine 1 is idling based on the shifted position of the gearshift lever 76.
(4) In the preferred embodiment, the clutch upper switch 73 detects depression of the clutch pedal 72. Detection of depression of the clutch pedal 72 with the clutch upper switch 73 is set as the restarting condition. The electronic control unit 60 predicts the starting of the vehicle based on the depression of the clutch pedal 72 to automatically restart the internal combustion engine 1.

The above-described preferred embodiment may be modified as described below.

The electronic control unit 60 may always inject fuel in advance into the cylinder 11 that is in the exhaust stroke based on the crank angle and drive the starter motor 18 when restarting the internal combustion engine 1 instead of injecting fuel in advance into the cylinder 11 that is in the intake stroke. In other words, when the restarting conditions are satisfied, the fuel may be injected into the cylinder that is capable of burning the air-fuel mixture first or second based on the crank angle stored in the memory 61.

The present invention may be applied to a vehicle equipped with an automatic transmission. When the present invention is applied to a vehicle equipped with the automatic transmission, the stopping conditions would include the stopping of the vehicle when the brake pedal is depressed in a state in which the gearshift lever is shifted to the D range, the N range, or the P range. The restarting conditions would be the depressed brake pedal being released in a state in which the gearshift lever is shifted to the D range or the gearshift lever is shifted from the N range or the P range to the D range.

The stopping conditions and the restarting conditions can be changed even if the present invention is applied to a controller for an internal combustion engine mounted on a vehicle equipped with a manual transmission in the same manner as the preferred embodiment described above. That is, regardless of how the stopping conditions and the restarting conditions are set, in a state in which the engine is automatically stopped, the normal starting process may be executed and the internal combustion engine may be restarted when the main switch 71 is turned to the "START" position before the restarting conditions are satisfied.

The preferred embodiment is an example in which the present invention is applied to a controller for a four-cylinder in-line internal combustion engine 1 including four cylinders 11. However, the present invention may be applied to an internal combustion engine of other cylinder arrangements such as V-type six-cylinder or eight-cylinder internal combustion engine.

## Claims

1. A controller for an internal combustion engine (1), the controller comprising:
an automatic stopping means (60) adapted to stop the internal combustion engine (1) when predetermined stopping conditions are satisfied;
a memory (61) for storing a crank angle of when the internal combustion engine (1) is stopped by the automatic stopping means (60);
an automatic restarting means (60) adapted to determine a cylinder (11) which one of cylinders (11) is capable of burning air fuel mixture based on the crank angle stored in the memory (61) when predetermined restarting conditions are satisfied and to execute an automatic starting process that starts the internal combustion engine (1) by driving a starter motor (18) after injecting fuel in advance into the determined one of the cylinders (11) and then injects fuel individually into each of the cylinders (11); and
a main switch (71) for driving the starter motor (18) when arranged at a start position;
wherein the controller executes a normal starting process when the main switch (71) is arranged at the start position to start the internal combustion engine (1) by driving the starter motor (18) and injecting fuel and then executes an automatic stopping and starting control that automatically stops or restarts the internal combustion engine (1) with the automatic stopping means (60) and the automatic restarting means (60), the controller being
**characterized in that:**
the controller invalidates the automatic starting process of the automatic restarting means (60) and executes the normal starting process when the main switch (71) is arranged at the start position during a period from when the internal combustion engine (1) is stopped by the automatic stopping means (60) until when the predetermined restarting conditions are satisfied.

2. The controller according to claim 1, being **characterized in that** the automatic restarting means (60) is adapted to inject fuel in advance to the cylinder (11) in which air-fuel mixture will burn first or the second based on the crank angle stored in the memory (71) when the predetermined restarting conditions are satisfied.

3. The controller according to claim 1 or 2, being **characterized in that** the automatic restarting means (60) is adapted to estimate the time period required for the cylinder (11) that is in an intake stroke to shift to a compression stroke based on the crank angle stored in the memory (61) when the predetermined restarting conditions are satisfied, and the automatic restarting means (60) injects fuel in advance into the cylinder (11) that is in the intake stroke when the estimated time period is longer than or equal to a predetermined time period and injects fuel in advance into the cylinder (11) that is in an exhaust stroke when the estimated time period is shorter than the predetermined time period.

4. The controller according to any one of claims 1 to 3, being **characterized in that:**
the internal combustion engine (1) is mounted on a vehicle equipped with a manual transmission; and
the predetermined stopping conditions include the vehicle being still and a gearshift position of the manual transmission being at a neutral position.

5. The controller according to claim 4, further being
**characterized by:**
a clutch switch (73, 74) for detecting depression of a clutch pedal (72); and
the predetermined restarting conditions including depression of the clutch pedal (72) being detected by the clutch switch (73, 74).
